# FASCICULE DE BREVET EUROPEEN

(11) **EP 2 030 050 B1**
(45) Date de publication et mention de la délivrance du brevet: **14.11.2012**
(21) Numéro de dépôt: 07788827.9
(22) Date de dépôt: 01.06.2007
(51) Int. Cl.: G01V 15/00, F16L 1/11

(54) **SYSTEME DE DETECTION, ADAPTE A L'IDENTIFICATION ET AU SUIVI DE CANALISATIONS ENTERREES OU D'AUTRES CORPS ENFOUIS DANS LE SOL OU NOYES DANS DES OUVRAGES DE GENIE CIVIL**
SYSTEM ZUR ERKENNUNG UND ORTUNG VERGRABENER ROHRE ODER ANDERER UNTERIRDISCH VERGRABENER ODER EINGEBETTETER KÖRPER BEI BAUARBEITEN
DETECTION SYSTEM SUITABLE FOR IDENTIFYING AND TRACKING BURIED PIPES OR OTHERS BODIES BURIED IN THE GROUND OR EMBEDDED IN CIVIL ENGINEERING WORKS

(30) Priorité: 02.06.2006 FR 0604948
(43) Date de publication de la demande: 04.03.2009
(73) Titulaire: Société Plymouth Française, 69320 Feyzin (FR); Aperam Alloys Imphy, 93200 Saint Denis (FR)
(72) Inventeur: ARNAUD, Daniel, F-42100 Saint Etienne (FR); BELLOIR, Fabien, F-51380 Trepail (FR); DAMOUR, François-Xavier, F-69004 Lyon (FR); REYAL, Jean-Pierre, F-95610 Eragny (FR)
(74) Mandataire: Maureau, Philippe
(86) Numéro de dépôt international: PCT/FR2007/000915
(87) Numéro de publication internationale: WO 2007/141415

(56) Documents cités:
- WO-A-00/75894
- WO-A-01/75485
- US-A- 5 036 210
- US-B1- 6 323 769

## Description

L'invention concerne un système de détection, adapté à l'identification et au suivi de canalisations enterrées ou d'autres corps enfouis dans le sol ou noyés dans des ouvrages de génie civil.

Les ouvrages de génie civil sont par exemple des routes ou des ponts.

La difficulté d'obtenir des informations sur la présence, le tracé et la nature de canalisations ou de lignes enterrées tient à ce que, la plupart du temps, rien n'est visible à l'extérieur et que les plans existant se révèlent souvent imprécis, incomplets, voire quelquefois erronés.

Il importe, pour un gain de temps et de coûts, de pouvoir détecter la présence de telles canalisations et lignes, et de les localiser avec précision, sans creuser le sol, ni détruire des ouvrages, à l'occasion de travaux ultérieurs. D'une façon générale, les procédés utilisés doivent être simples à mettre en oeuvre par du personnel de chantier de qualification modeste. En outre, l'appareillage pour la mise en oeuvre de ces procédés de détection doit être robuste et fiable et son coût doit rester inférieur à l'investissement que nécessiterait la mise à jour par fouille des canalisations ou de leur grillage avertisseur pour s'assurer de leur présence.

Plusieurs procédés peuvent être utilisés pour réaliser la détection de canalisations enterrées. Un premier procédé consiste à "visualiser" une canalisation enterrée métallique ou non à l'aide d'un radar de sous-sol. Cependant, le coût et la complexité des systèmes mis en oeuvre font que ces systèmes sont inadaptés aux problèmes pratiques posés.

La détection par voie électromagnétique est la méthode la plus utilisée. Cette détection électromagnétique peut être effectuée par des détecteurs de métaux classiques, des détecteurs électromagnétiques reposant sur la détection d'un signal, et des détecteurs associés à des marqueurs.

Les détecteurs de métaux classiques détectent de façon indifférenciée toutes les pièces métalliques qui sont enfouies dans le sol, sans faire de discriminations entre les pièces à détecter et des pièces parasites.

Si la canalisation est revêtue d'un dispositif de codage comportant des éléments électriquement conducteurs, tels que plaques ou fils, disposés à des espacements déterminés, et montés sur un support isolant, un détecteur peut détecter de tels éléments, mais la lecture du code peut être perturbée par les éléments parasites enfouis dans le sol, ou encore par la présence proche de plusieurs objets comportant des éléments de codage.

Une autre solution consiste à utiliser des détecteurs électromagnétiques reposant sur la détection d'un signal. Cette solution nécessite l'injection d'un signal électrique dans une canalisation ou dans un câble enfoui, ou dans un élément métallique associé et suivant le tracé d'une canalisation. Une telle solution présente l'inconvénient de devoir accéder partiellement à la canalisation ou à l'élément métallique associé pour injecter le signal électrique, via des boîtiers installés à distances régulières sur la ligne pour servir de points d'accès.

Dans certains cas, il est possible d'utiliser un détecteur à signal passif, reposant sur la détection d'un signal existant. Tel est le cas des câbles sous tension des lignes du réseau de distribution d'électricité et du réseau téléphonique, où un courant ou signal est habituellement présent. La terre est aussi le siège de nombreux courants de retour qui tendent à se rencontrer dans les canalisations métalliques. Toutefois, la détection d'un câble sous tension non chargé n'est pas possible, puisque seule la circulation d'un courant engendre un champ magnétique.

Cette détection est cependant aléatoire en raison de la possibilité de charges variables ou nulles dans le cas d'un réseau de distribution d'électricité, en raison de l'utilisation très répandue de paires de câbles torsadées, de sorte que les champs "aller" et "retour" tendent à se compenser.

Il existe des détecteurs associés à des marqueurs semi-actifs ou résonnants. Les marqueurs comportent une bobine passive enrobée dans une coquille protectrice en matière isolante, et accordée à une certaine fréquence. Le détecteur comprend un générateur électromagnétique qui pulse une gamme de fréquences et excite les bobines. L'inconvénient d'un tel système réside dans le fait que, s'il s'agit de suivre une canalisation, il est nécessaire d'enfouir les marqueurs à intervalles réguliers et de façon suffisamment rapprochée pour ne pas perdre la canalisation, ce qui entraîne un coût d'installation élevé. De plus, aucune indication de direction n'est donnée. Enfin, s'il est possible de détecter une canalisation, l'identification de celle-ci est beaucoup plus complexe.

Le document FR 2 819 055 décrit un système de détection, adapté à l'identification et au suivi de canalisations enterrées ou d'autres corps enfouis dans le sol ou noyés dans des ouvrages de génie civil, comprenant :
- un dispositif de codage, apposé ou intégré aux objets ou placé à une distance prédéterminée des objets, se présentant sous la forme d'une succession d'éléments de codage de faible épaisseur, formant chacun une surface de dimension prédéterminée, ces éléments étant séparés les uns des autres,
- un dispositif de détection comportant au moins une bobine d'émission, au moins une bobine de réception,
- un dispositif de mesure de déplacement, et
- un dispositif de traitement des signaux issus de la bobine de réception.

L'émission d'une onde électromagnétique d'énergie suffisante permet d'obtenir en retour une onde de fréquence fondamentale, émise par chaque élément de codage réalisé en matériau conducteur. Un traitement particulier du signal permet en outre de minimiser l'impact des éléments parasites dans le sol.

Toutefois, la mise en place d'un tel système ne permet pas de s'affranchir complètement des éléments conducteurs parasites présents dans le sol.

En outre, si un tel système s'est révélé efficace dans certaines applications, la fiabilité de la détection reste limitée, le signal de réponse comportant peu d'informations. Celui-ci étant en effet composé d'une onde unique de fréquence fondamentale.

Enfin, l'incorporation de tels systèmes dans des dispositifs avertisseurs peut s'avérer complexe, notamment en raison de leur encombrement.

L'invention vise à résoudre ces inconvénients en proposant un système de détection, adapté à l'identification et au suivi de canalisations enterrées ou d'autres corps enfouis dans le sol ou noyés dans des ouvrages de génie civil, qui puisse être utilisé facilement et à faible coût, et permettant de réaliser une détection, une identification et un suivi fiable, même en présence d'éléments parasites dans le sol.

A cet effet, l'invention concerne un système de détection, adapté à l'identification et au suivi de canalisations enterrées ou d'autres corps enfouis dans le sol ou noyés dans des ouvrages de génie civil, comprenant :
- un dispositif de codage, apposé ou intégré aux objets ou placé à une distance prédéterminée des objets, se présentant sous la forme d'une succession d'éléments de codage de faible épaisseur, formant chacun une surface de dimension prédéterminée, ces éléments étant séparés les uns des autres,
- un dispositif de détection comportant au moins une bobine d'émission, au moins une bobine de réception, et
- un dispositif de traitement des signaux issus des différentes bobines,
caractérisé en ce qu'au moins certains des éléments de codage sont réalisés en matériau magnétique, le dispositif de détection étant agencé pour saturer ou modifier le point de fonctionnement des éléments de codage dans leur cycle de fonctionnement, qui émettent alors un signal riche en fréquences, composé d'une onde de fréquence fondamentale ainsi que d'ondes de fréquence multiple de la valeur de la fréquence fondamentale, appelées harmoniques, recueillir et traiter le signal issu de ces éléments, et reconstituer le codage de l'objet.

L'utilisation des propriétés magnétiques des éléments de codage constituant le code permet d'obtenir une multitude d'informations et ainsi de fiabiliser la lecture de ce code.

En effet, alors que l'utilisation classique d'éléments de codage conducteurs permet uniquement d'obtenir, en réponse, une onde de fréquence fondamentale, ce système s'appuie sur un signal composé à la fois d'une onde de fréquence fondamentale ainsi que d'ondes de fréquences multiples, correspondant aux harmoniques.

Le terme « multiple » ne doit pas être entendu au sens strict. Ainsi une onde de fréquence multiple peut par exemple être une onde dont la fréquence est proche du double de la fréquence fondamentale, mais non exactement égale à cette valeur.

Un tel système permet en outre de s'affranchir des éléments parasites, généralement conducteurs, enfouis dans le sol ou présents aux alentours de l'objet à identifier.

En outre, l'identification d'ondes harmoniques correspondant à une onde fondamentale permet d'identifier et de séparer les signaux émis par les éléments conducteurs parasites et ceux émis par les éléments de codage.

Avantageusement, les éléments de codage présentent une perméabilité maximale inférieure à 200 000, une induction à saturation inférieure à 2 Teslas et un champ coercitif inférieur à 2 A/m, ces mesures étant faites en courant continu.

Ce type d'éléments de codage peut être saturé à l'aide d'une onde électromagnétique d'énergie faible.

Or, les dispositifs de détection sont destinés à être transportés sur la zone de mesure. La possibilité d'utiliser une faible énergie d'excitation pour obtenir une réponse fiable augmente alors la portabilité du système de détection.

En outre, les éléments parasites magnétiques présents dans le sol, qui sont en nombre réduits par comparaison avec les éléments conducteurs, sont difficilement saturables.

Ainsi, si une onde de faible énergie est émise, seuls les éléments de codage émettront une réponse sous forme d'ondes identifiables.

Selon une première forme de réalisation, les éléments de codage sont réalisés en alliage ferromagnétique du type nanocristallin, les alliages nanocristallins étant des alliages de composition type (Fe_{74,5}Si_{13,5}B₉Nb₃,Cuₓ) fabriqués par trempe rapide sur une roue tournant à grande vitesse, ou encore des alliages du type FeZrBCu ou tout type d'alliage de propriétés voisines.

Selon une seconde forme de réalisation, les éléments de codage sont réalisés en alliage de type fer-nickel ou fer-nickel-cobalt, en alliage magnétique amorphe à base de fer ou de cobalt.

De tels matériaux ont d'excellentes propriétés magnétiques et sont facilement saturables.

Selon une troisième forme de réalisation, on peut utiliser des alliages du type fer-silicium, des aciers qui nécessitent cependant une énergie plus importante pour leur saturation.

Préférentiellement, les éléments de codage sont recouverts à l'aide de films, par exemple en polyéthylène téréphtalate (PET), en polyéthylène (PE) ou en polyamide, en vue de créer un système de code déroulable au droit de la canalisation, de leur protection dans le temps et de leur protection contre la corrosion et les agressions mécaniques.

Selon une caractéristique de l'invention, les éléments de codage comportent plusieurs couches de matériaux magnétiques différents.

Un tel agencement permet d'augmenter les informations pouvant être obtenues par chaque élément de codage, afin de densifier le codage.

Selon une caractéristique alternative, les éléments de codage comportent au moins une couche en matériau magnétique et au moins une couche en matériau conducteur.

Cette caractéristique permet d'utiliser à la fois les propriétés magnétiques des éléments de codage tout en s'appuyant en outre sur une détection utilisant les courants de Foucault.

Avantageusement, les éléments de codage, destinés à équiper un corps longitudinal de type canalisation, se présentent sous la forme d'étiquettes allongées, les éléments de codage étant espacés les uns par rapport aux autres suivant l'axe du corps et orientés selon cet axe et/ou forment un angle avec celui-ci.

Une telle disposition des éléments de codage le long du corps permet de réaliser un code identifiable facilitant le suivi du corps par l'utilisateur.

Selon une caractéristique, les éléments de codage présentent différentes formes et/ou différentes dimensions.

La forme et la dimension des éléments permettent de réaliser une densification de l'information, offrant ainsi des possibilités accrues de codage.

Selon une possibilité, les éléments de codage comportent au moins une couche de peinture à base de ferrites et/ou de poudre d'alliage nanocristallins.

De toute façon, l'invention sera bien comprise à l'aide de la description qui suit, en référence au dessin schématique annexé représentant, à titre d'exemples non limitatifs, plusieurs formes d'exécution de ce système.
Figure 1 est une vue d'un tronçon de canalisation équipé d'éléments de codage, en position enterrée et en cours de phase de détection ;
Figure 2 est une vue en perspective représentant les bobines d'émission et de réception disposées selon une première variante de réalisation ;
Figures 3 et 4 sont des vues correspondant à la figure 2, respectivement d'une deuxième et d'une troisième formes de réalisation ;
Figures 5 à 12 sont des vues représentant une partie de la canalisation équipée d'éléments de codage selon différentes formes de réalisation de l'invention ;

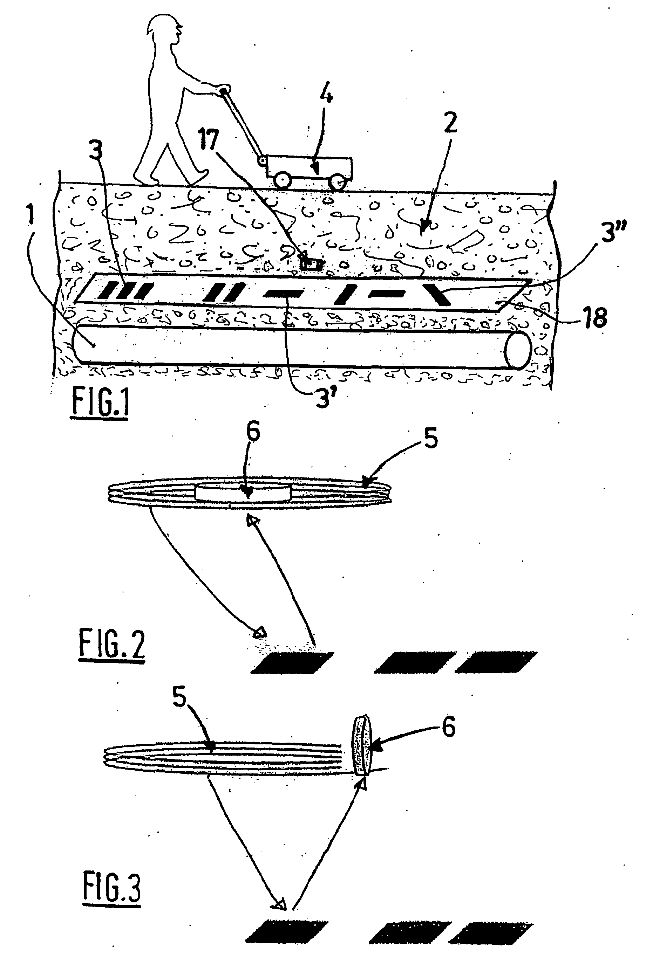

La figure 1 décrit une canalisation 1 enfouie dans la terre 2. Au dessus de cette canalisation 1, à une distance prédéterminée, est déposée une bande constituée d'une pluralité d'éléments de codage magnétiques 3, 3' et 3", collés entre deux bandes de polymère. Comme l'indique le schéma, cette bande est enfouie dans le sol.

Le système de détection, d'identification et de suivi comporte un support 4 déplaçable par un utilisateur en surface et comprenant au moins une bobine d'émission ou d'excitation 5, au moins une bobine de réception 6, un dispositif de traitement des signaux issus de la bobine de réception 6 et au moins un système pour déterminer la position, la direction du déplacement et la vitesse de déplacement de l'ensemble.

De préférence, une roue codeuse est utilisée afin de déterminer la position spatiale du système de détection.

La bobine d'émission 5 est préférentiellement une bobine plate, ce qui permet de saturer plus facilement les éléments de codage 3, quelle que soit leur orientation. On préfère en outre qu'elle soit parallèle aux éléments de codage 3, 3'et 3" afin d'augmenter l'intensité du signal.

Selon une première forme d'exécution représentée en figure 2, chaque bobine de réception 6 est placée parallèlement à la bobine d'émission 5 correspondante et dans la zone d'ombre de cette dernière, c'est-à-dire sensiblement au centre de celle-ci.

Selon une deuxième forme d'exécution représentée en figure 3, la bobine de réception 6 est disposée perpendiculairement à la bobine d'émission 5 et à l'axe de la canalisation 1.

On pourrait également avoir plusieurs bobines de réception 6 associées à chaque bobine d'émission 5.

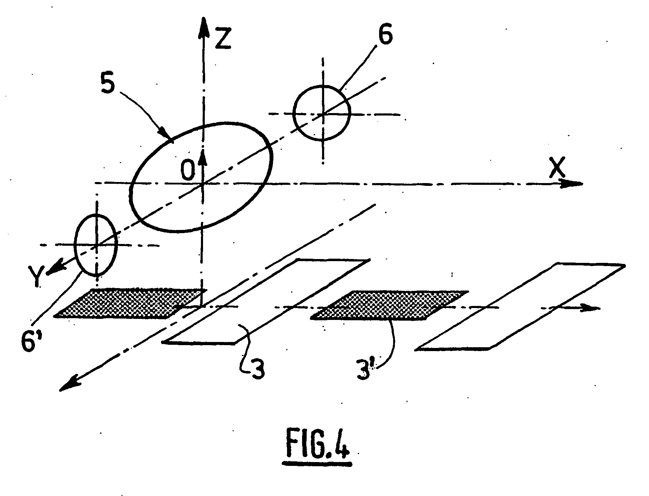

Selon une troisième forme d'exécution représentée en figure 4, le système comporte au moins une bobine d'émission 5 disposée parallèlement aux éléments de codage 3, c'est-à-dire suivant le plan XOY, et associée au moins deux bobines de réception 6 et 6', disposées par exemple de part et d'autre de la bobine d'émission, la bobine de réception 6 étant disposée dans le plan parallèle au plan XOZ et la bobine 6' étant disposée dans un plan parallèle au plan YOZ.

La combinaison de la bobine de réception 5 et de la ou des bobines de réception 6 forme alors un détecteur électromagnétique basé sur le principe de balance d'induction.

L'invention vise à utiliser les propriétés magnétiques des éléments de codage 3, 3' et 3".

Pour cela, une onde électromagnétique de fréquence et d'énergie déterminées est envoyée dans le sol 2, en direction de la canalisation 1, afin d'atteindre les éléments de codage 3.

Le sol comporte une pluralité d'éléments parasites 17, composés généralement de matériaux conducteurs et/ou de matériaux magnétiques difficilement saturables.

La fréquence, que nous appellerons fondamentale et que nous noterons f₀, et l'énergie de l'onde émise sont adaptées en fonction des propriétés intrinsèques du matériau utilisé et de la profondeur de l'élément. Cette fréquence et cette énergie sont utilisées pour exciter chaque élément de codage magnétique 3 3' et 3" de manière à porter cet élément dans un état proche de la saturation.

On rappelle que l'état de saturation d'un élément magnétique est l'état dans lequel il est soumis à un champ magnétique extérieur dont l'intensité est si importante que l'induction magnétique ne peut être augmentée de façon appréciable par un accroissement de l'intensité dans ce champ. Cet état correspond ainsi à l'état d'aimantation maximum de l'élément.

Les éléments de codage soumis à une telle saturation émettent alors une onde de fréquence fondamentale f₀ ainsi qu'une pluralité d'ondes de fréquences multiples 2f₀, 3f₀, ...,nfₒ correspondant aux harmoniques.

Ce signal est ensuite recueilli par la ou les bobines de réception puis transmis au dispositif de traitement.

En d'autres termes, la bobine d'émission, parcourue par un courant alternatif de fréquence fo égale à 10 kHz, par exemple, génère un champ magnétique d'excitation suffisant pour saturer les élément de codage 3, 3' et 3" de type étiquette ou « tags ». Les caractéristiques techniques de ces étiquettes sont décrites ci-après.

Cette saturation est traduite par une déformation du signal émis et par la création des harmoniques caractérisant le point de fonctionnement des étiquettes 3,3' et 3".

Les bobines de réception 6 et 6' sont éventuellement placées dans des zones appelées « zones d'ombre » et sont accordées sur les fréquences souhaitées, détectent la variation du champ magnétique généré par la bobine d'émission 5, due à la présence des étiquettes 3 et 3'. Il est à noter qu'une zone d'ombre est définie comme étant la région où le flux total du champ magnétique de fréquence fo généré par la bobine d'émission dans la bobine de réception est très faible, voire nul en l'absence de cible, c'est-à-dire d'élément de codage ou étiquette 3 ou 3'. Les fréquences utilisées sont généralement la deuxième (2f₀) et la troisième harmoniques (3f₀).

De plus, outre l'exploitation de la caractéristique magnétique non linéaire des matériaux des étiquettes, le système selon l'invention est également apte à exploiter, le fait que les étiquettes minces et longues ont une direction d'aimantation facile dans le sens long des étiquettes.

L'orientation des bobines 6 et 6' est fonction de celle des étiquettes 3 et 3' à détecter. A chaque type d'étiquettes, c'est-à-dire pour chaque orientation des étiquettes, est associée au moins une bobine de réception 6 ou 6' dont le plan est orthogonal à l'orientation de l'étiquette 3 ou 3'. Ceci permet de détecter un flux magnétique maximum correspondant à chaque couple « bobine - type d'étiquettes ».

Chaque type de bobines lit ainsi individuellement un type d'étiquettes. Toutefois, les étiquettes d'un autre type envoient aussi un signal dans chaque bobine de réception. Ce signal perturbateur est minimisé lorsque le système de détection est aligné sur les étiquettes 3 ou 3', par le choix de mettre la normale au plan d'une bobine de réception parallèlement à l'axe de symétrie d'un type d'étiquettes. Les bobines de réception voient alors principalement les étiquettes qui leur sont orthogonales.

La structure et de la position des différentes bobines présentent en outre les avantages suivants. Le champ magnétique généré par la bobine d'émission est un champ classique généré par une bobine plate conventionnelle. Ainsi, il est indifférent que l'élément de codage sous forme d'étiquette passe dans une zone de champ magnétique nul, c'est-à-dire à proximité ou dans la bobine d'émission. Il suffit simplement que l'élément de codage soit excité par un champ magnétique alternatif de manière à le saturer.

On peut également associer à un type d'étiquettes une première fréquence harmonique, par exemple 2f₀, et à un autre type d'étiquettes une autre fréquence harmonique, par exemple 3f₀ ou nfo.

Il est alors possible de discriminer les étiquettes, et d'obtenir au travers des bobines de réception, des informations en phase et en amplitudes qui pourront être traitées séparément pour chaque classe d'étiquettes 3 ou 3'.

Les signaux caractéristiques des codes sont obtenus par comparaison, typiquement une détection synchrone dans laquelle la réception du signal est réalisée en synchronisme avec l'émission, entre le signal émis par les bobines d'émission et le signal reçu par les bobines de réception.

Il est à noter que toute autre méthode de comparaison connue pourrait également être utilisée.

La présence des éléments de codage magnétiques modifie le signal reçu, ce qui permet de détecter la présence et la nature des éléments.

Le signal émis, composé à la fois d'une onde de fréquence fondamentale et d'ondes correspondant aux harmoniques, permet d'augmenter la densité du codage, c'est-à-dire le nombre d'informations, après traitement du signal. La fiabilité de lecture du code correspondant et donc de la détection est ainsi considérablement augmentée.

En cas de juxtaposition de différents codes distincts ou de présence d'éléments magnétiques pertubateurs, les signaux caractéristiques des codes sont perturbés. Cependant, grâce à la redondance d'informations due à l'utilisation d'algorithmes de séparation de source et, si nécessaire, à l'utilisation de plusieurs bobines de réceptions associées à chaque bobine d'émission, il est possible de reconstituer le véritable signal représentatif du code.

Il suffit alors d'identifier le signal qui représente la signature du code par différentes méthodes de reconnaissance de formes et de classification, du type réseaux de neurones, logique floue et autres méthodes classiques.

La réponse finale est obtenue par la mise en oeuvre de processus d'aide à la décision qui analysent les réponses de chacune des méthodes précédemment citées.

Ce type de traitement du signal issu des bobines de réception est décrit plus en détail dans l'article « BELLOIR F., HUEZ R., BILLAT A. ; 2000 ; A smart flat-coil eddy-current sensor for metal-tag recognition ; Measurement science & technology; vol. 11, n°4, p. 367-374 ».

Le système selon l'invention permet alors de détecter des canalisations enfouies à une profondeur pouvant atteindre 2m.

Il s'agit à présent de détailler la composition et le positionnement des élements de codage 3 et 3' sur le corps longitudinal 1.

Ces éléments de codage 3 sont réalisés en matériau magnétique doux et présentent, de préférence, une perméabilité inférieure à 200 000, une induction à saturation inférieure à 2 Tesla et un champ coercitif inférieur à 1 A/m.

Selon une première possibilité, les éléments de 3 sont réalisés en alliage de type fer-nickel ou fer-cobalt, en alliage magnétique amorphe à base de fer ou de cobalt, en alliage de type fer-silicium ou en acier.

Des alliages du type fer-nickel particulièrement intéressants pour leur haute perméabilité sont le permalloy et le mumétal.

Selon une autre possibilité, les éléments de codage 3 présentent une bande d'alliages nanocristallins, disposée entre deux feuilles de polymère de type polyéthylène téréphtalate (PET), polyéthylène (PE), polyamide ou autre.

Dans ce cas, la perméabilité du matériau est de l'ordre de 200 000, l'induction à saturation est elévée, sensiblement de l'ordre de 1,2 T et le champ coercitif est faible, inférieur à 2 A/m. En outre, de tels éléments de codage 3 en matériau nanocristallin peuvent être utilisés avec une fréquence d'émission faible, inférieure à 1 MHz et par exemple de l'ordre de 10 kHz.

Ces éléments de codage se présentent ainsi sous la forme d'étiquettes ou « tags » s'aimantant préférentiellement dans le sens de la longueur qui est la direction de facile aimantation. Comme cela est décrit ci-après, ces étiquettes peuvent être placées parallèlement au déplacement du détecteur électromagnétique, orthogonalement à ce déplacement, ou encore selon un angle déterminé par rapport à celui-ci.

On peut en outre utiliser des peintures magnétiques constituées d'un solvant, d'un liant polymère et de poudres magnétiques. Dans ce cas, les poudres peuvent être soit des poudres de ferrites, soit des poudres d'alliages nanocristallins. Ces deux types de poudre présentent l'avantage de pouvoir travailler avec un signal de fréquence plus élevée, mais ne peuvent pas être enfouies profondément.

Les éléments de codage 3 et 3' peuvent également être réalisés sous la forme de couches de matériaux magnétiques différents, voire comporter des couches en matériau conducteur.

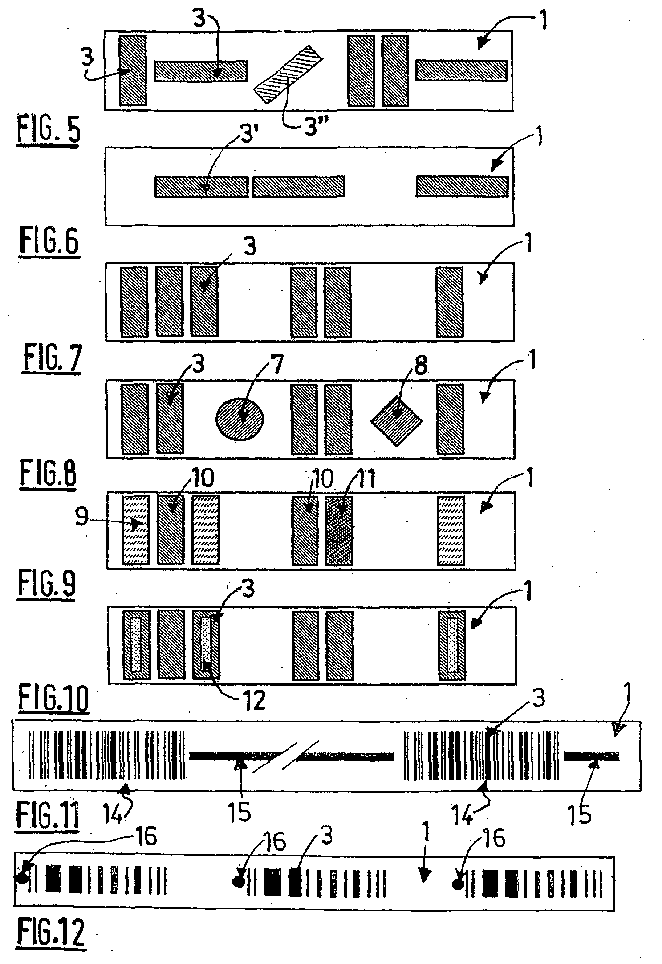

Les figures 5 à 12 présentent quelques une des formes de réalisation envisageables en ce qui concerne le positionnement, la forme et le choix des éléments de codage.

Ainsi, selon une forme de réalisation apparaissant en figure 5, les éléments de codage 3 et 3' se présentent sous la forme d'étiquettes allongées, les éléments de codage étant espacés les uns par rapport aux autres suivant l'axe du corps 1, une partie des éléments 3 étant orientés selon cet axe, une partie 3' étant orientée perpendiculairement à celui-ci, et une autre partie 3 » » étant orientée selon un autre angle par rapport à l'axe défini par le corps 1.

Alternativement, les éléments de codage 3 sont orientés uniquement selon l'axe de la canalisation 1 (figure 6) ou uniquement de façon perpendiculaire par rapport à celui-ci (figure 7).

Selon une autre forme de réalisation, représentée en figure 8, certains des éléments de codage présentent une forme différente, par exemple circulaire 7 ou polygonale 8.

Comme cela apparaît en figure 9, les éléments de codage peuvent être réalisées dans plusieurs matériaux magnétiques différents.

L'avantage d'un tel dispositif réside en ce qu'en émettant un signal plus ou moins intense, on peut parvenir à saturer de manière sélective chaque groupe d'éléments de codage possédant les mêmes propriétés magnétiques.

De cette façon, on augmente les possibilités d'informations pouvant être contenues dans un tel code.

Supposons par exemple que le code se compose de trois groupes 9, 10, 11 d'éléments de codage, chacun étant réalisé dans un matériau différent de sorte que chaque groupe a une induction de saturation différente, respectivement B1, B2 et B3, avec B1 >B2>B3.

Dans ce cas, selon l'intensité du champ magnétique, il est possible de saturer les deux premiers groupes 9, 10, sans saturer le troisième 11.

La réponse sera alors constituée uniquement des harmoniques des deux premiers groupes 9, 10.

Comme représenté en figure 10, une autre variante consiste à fournir un code composé d'éléments de codage 3 réalisés dans un même matériau magnétique, certains des éléments étant recouverts par une bande en matériau conducteur 12. Ces bandes 12 sont par exemple réalisées en cuivre et sont d'une épaisseur de 20 microns. Celles-ci sont en outre isolées électriquement du matériau magnétique.

La figure 11 représente des codes 14 composés d'éléments de codage 3 et espacés par exemple de 10 mètres. Ces codes sont reliés par des bandes ou fils intermédiaires 15 réalisés en matériau magnétique.

Ces bandes ou fils 15 permettent de suivre la canalisation jusqu'au code correspondant.

Selon une variante supplémentaire représentée en figure 12, des aimants permanents 16, particulièrement faciles à identifier, peuvent être disposés en début de code afin d'identifier si nécessaire le démarrage et/ou l'orientation de la canalisation enterrée 1.

Comme il va de soi, l'invention ne se limite pas aux seules formes d'exécution de ce système, décrites ci-dessus à titre d'exemple, mais elle embrasse au contraire toutes les variantes. C'est ainsi notamment que ce dispositif pourrait également servir à la détection et à la localisation de points singuliers, tels que des embranchements de canalisation.

## Revendications

1. Système de détection, adapté à l'identification et au suivi de canalisations enterrées ou d'autres corps enfouis dans le sol ou noyés dans des ouvrages de génie civil, comprenant :
- un dispositif de codage, apposé ou intégré aux objets (1) ou placé à une distance prédéterminée des objets (1), se présentant sous la forme d'une succession d'éléments de codage (3) de faible épaisseur, formant chacun une surface de dimension prédéterminée, ces éléments étant séparés les uns des autres, et leur agencement permettant de définir un code,
- un dispositif de détection comportant au moins une bobine d'émission (5), au moins une bobine de réception (6), et
- un dispositif de traitement des signaux issus des différentes bobines (5, 6),
**caractérisé en ce qu'**au moins certains des éléments de codage (3) sont réalisés en matériau magnétique, le dispositif de détection étant agencé pour saturer ou modifier le point de fonctionnement des éléments de codage (3) dans leur cycle de fonctionnement, qui émettent alors un signal riche en fréquences, composé d'une onde de fréquence fondamentale ainsi que d'ondes de fréquence multiple de la valeur de la fréquence fondamentale, appelées harmoniques, recueillir et traiter le signal issu de ces éléments (3), et reconstituer le codage de l'objet (1).

2. Système selon la revendication 1, **caractérisé en ce que** les éléments de codage (3) présentent une perméabilité inférieure à 200 000, une induction à saturation inférieure à 2 Teslas et un champ coercitif inférieur à 1 A/m.

3. Système selon l'une des revendications 1 et 2, **caractérisé en ce que** les éléments de codage (3) sont réalisés en alliage ferromagnétique du type nanocristallin.

4. Système selon la revendication 3, **caractérisé en ce que** l'alliage est de composition type (Fe_{74,5}Si_{13,5}B9Nb₃,Cuₓ), fabriqué par trempe rapide sur une roue tournant à grande vitesse, ou encore des alliages du type FeZrBCu.

5. Système selon l'une des revendications 1 et 2, **caractérisé en ce que** les éléments de codage (3) sont réalisés en alliage de type fer-nickel ou fer-cobalt, en alliage magnétique amorphe à base de fer ou de cobalt, en alliage de type fer-silicium ou en acier.

6. Système selon l'une des revendications 1 à 5, **caractérisé en ce que** les éléments de codage (3) sont recouverts à l'aide de films, par exemple en polyéthylène téréphtalate (PET), en polyéthylène (PE) ou en polyamide.

7. Système selon l'une des revendications 1 à 6, **caractérisé en ce que** les éléments de codage (3) comportent plusieurs couches de matériaux magnétiques différents.

8. Système selon l'une des revendications 1 à 6, **caractérisé en ce que** les éléments de codage (3) comportent au moins une couche en matériau magnétique et au moins une couche en matériau conducteur.

9. Système selon l'une des revendications 1 à 8, **caractérisé en ce que** les éléments de codage (3), destinés à équiper un corps longitudinal (1) de type canalisation, se présentent sous la forme d'étiquettes allongées, les éléments de codage (3) étant espacés les uns par rapport aux autres suivant l'axe du corps (1) et orientés selon cet axe et/ou forme un angle avec celui-ci.

10. Système selon l'une des revendications 1 à 9, **caractérisé en ce que** les éléments de codage (3) présentent différentes formes et/ou différentes dimensions.

11. Système selon la revendication 10, **caractérisé en ce que** les éléments de codage (3) comprennent au moins une bande ou fil magnétique (15).

12. Système selon l'une des revendications 1 à 11, **caractérisé en ce que** les éléments de codage (3) comportent au moins une couche de peinture à base de ferrites et/ou de poudre d'alliage nanocristallins.

## Claims

1. A detection system suitable for identifying and tracking buried pipes or other bodies buried in the ground or embedded in civil engineering works, which comprises:
- a coding device affixed to or integrated into the objects (1) or placed at a predetermined distance from the objects (1), taking the form of a succession of thin coding elements (3), each forming a surface of predetermined size, these elements being separated from one another, and their arrangement making it possible to define a code;
- a detection device comprising at least one transmission coil (5), at least one reception coil (6), and
- a signal processing device for processing the signals coming from the various coils (5, 6),
**characterized in that** at least some of the coding elements (3) are made of magnetic material, the detection device being designed to saturate or modify the point of operation of the coding elements (3) in their operating cycle, which then emit a frequency-rich signal made up of a wave having the fundamental frequency and waves having a frequency that is a multiple of the fundamental frequency, called harmonics, to gather and process the signal coming from these elements (3) and to reconstruct the coding of the object (1).

2. The system according to claim 1, **characterized in that** the coding elements (3) have a permeability below 200,000, a saturation induction of less than 2 T, and a coercive force of less than 1 A/m.

3. The system according to one of claims 1 and 2, **characterized in that** the coding elements (3) are made from a ferromagnetic alloy of the nanocrystalline type.

4. The system according to claim 3, **characterized in that** the alloy has a composition of type (Fe_{74,5}Si_{13,5}B₉Nb₃,Cuₓ) made by melt spinning on a highspeed rotary wheel, or alloys of type FeZrBCu.

5. The system according to one of claims 1 and 2, **characterized in that** the coding elements (3) are made from an alloy of the iron-nickel or iron-cobalt type, an iron- or cobalt-based amorphous magnetic alloy, an alloy of the iron-silicon type, or steel.

6. The system according to one of claims 1 to 5, **characterized in that** the coding elements (3) are covered using films, for example from polyethylene terephthalate (PET), polyethylene (PE), or polyamide.

7. The system according to one of claims 1 to 6, **characterized in that** the coding elements (3) have several layers of different magnetic materials.

8. The system according to one of claims 1 to 6, **characterized in that** the coding elements (3) have at least one layer of a magnetic material and at least one layer of a conducting material.

9. The system according to one of claims 1 to 8, **characterized in that** the coding elements (3), designed to equip a longitudinal body (1) of the pipe type, take the form of elongated labels, the coding elements (3) being spaced apart from one another along the axis of the body (1) and oriented along the axis and/or form an angle therewith.

10. The system according to one of claims 1 to 9, **characterized in that** the coding elements (3) assume different shapes and/or different sizes.

11. The system according to claim 10, **characterized in that** the coding elements (3) comprise at least one magnetic strip or wire (15).

12. The system according to one of claims 1 to 11, **characterized in that** the coding elements (3) have at least one layer of paint with a base of ferrites and/or nanocrystalline in alloy powder.

## Patentansprüche

1. Detektionssystem, geeignet für die Identifizierung und Verfolgung von erdverlegten Kanalisationen oder anderen im Boden vergrabenen oder in Baukörpern versenkten Körpern, das umfasst:
- eine Codiervorrichtung, die an den Objekten (1) angebracht oder in diese integriert oder in vorbestimmtem Abstand von den Objekten (1) platziert ist, in Form einer Abfolge von Codierelementen (3) geringer Dicke, die jeweils eine Fläche vorbestimmter Größe bilden, wobei diese Elemente voneinander getrennt sind und ihre Anordnung erlaubt, einen Code zu definieren,
- eine Detektionsvorrichtung, die mindestens eine Sendespule (5), mindestens eine Empfangsspule (6) aufweist, und
- eine Vorrichtung zur Verarbeitung der Signale der verschiedenen Spulen (5, 6),
**dadurch gekennzeichnet, dass** mindestens einige Codierelemente (3) aus magnetischem Material hergestellt sind, wobei die Detektionsvorrichtung ausgebildet ist, um den Betriebspunkt der Codierelemente (3) in ihrem Betriebszyklus zu sättigen oder zu verändern, die dann ein frequenzreiches Signal senden, das sich aus einer Frequenzgrundwelle sowie Frequenzwellen mit dem Vielfachen des Werts der Frequenzgrundwelle, die als Harmonische bezeichnet werden, zusammensetzt, das von diesen Elementen (3) gesendete Signal zu empfangen und zu verarbeiten und die Codierung des Objekts (1) wiederherzustellen.

2. System nach Anspruch 1, **dadurch gekennzeichnet, dass** die Codierelemente (3) eine Durchlässigkeit unter 200.000, eine Sättigungsinduktion unter 2 Tesla und ein Koerzitiffeld unter 1 A/m aufweisen.

3. System nach einem der Ansprüche 1 und 2, **dadurch gekennzeichnet, dass** die Codierelemente (3) aus ferromagnetischer Legierung des nanokristallinen Typs hergestellt sind.

4. System nach Anspruch 3, **dadurch gekennzeichnet, dass** die Legierung eine Zusammensetzung vom Typ (Fe_{74,5}Si_{13,5}B9Nb₃,Cuₓ) hat, hergestellt durch schnelles Härten auf einem mit hoher Geschwindigkeit drehenden Rad, oder auch Legierungen vom Typ FeZrBCu.

5. System nach einem der Ansprüche 1 und 2, **dadurch gekennzeichnet, dass** die Codierelemente (3) aus einer Legierung des Eisen-Nickel- oder Eisen-Kobalt-Typs, aus einer amorphen magnetischen Legierung auf der Basis von Eisen oder von Kobalt, aus einer Legierung des Eisen-Siliziums-Typs oder aus Stahl hergestellt sind.

6. System nach einem der Ansprüche 1 bis 5, **dadurch gekennzeichnet, dass** die Codierelemente (3) mit Hilfe von Folien abgedeckt sind, beispielsweise aus Polyethylenterephtalat (PET), aus Polyethylen (PE) oder aus Polyamid.

7. System nach einem der Ansprüche 1 bis 6, **dadurch gekennzeichnet, dass** die Codierelemente (3) mehrere Schichten verschiedener magnetischer Materialien aufweisen.

8. System nach einem der Ansprüche 1 bis 6, **dadurch gekennzeichnet, dass** die Codierelemente (3) mindesten eine Schicht aus magnetischem Material und mindestens eine Schicht aus leitendem Material aufweisen.

9. System nach einem der Ansprüche 1 bis 8, **dadurch gekennzeichnet, dass** die Codierelemente (3), die dazu bestimmt sind, einen länglichen Körper (1) vom Typ Kanalisation auszustatten, wie längliche Etiketten geformt sind, wobei die Codierelemente (3) voneinander gemäß der Achse des Körpers (1) beabstandet und gemäß dieser Achse ausgerichtet sind und/oder mit dieser einen Winkel bilden.

10. System nach einem der Ansprüche 1 bis 9, **dadurch gekennzeichnet, dass** die Codierelemente (3) verschiedene Formen und/oder verschiedene Größen aufweisen.

11. System nach Anspruch 10, **dadurch gekennzeichnet, dass** die Codierelemente (3) mindestens ein magnetisches Band oder Draht (15) umfassen.

12. System nach einem der Ansprüche 1 bis 11, **dadurch gekennzeichnet, dass** die Codierelemente (3) mindesten eine Farbschicht auf der Basis von nanokristallinen Ferriten und/oder Legierungspulver aufweisen.
